# EUROPÄISCHE PATENTANMELDUNG

(11) **EP 2 330 165 A1**
(43) Veröffentlichungstag der Anmeldung: **08.06.2011**
(21) Anmeldenummer: 09178076.7
(22) Anmeldetag: 04.12.2009
(51) Int. Cl.: C09J 5/00, C11D 11/00

(54) **Heissklebestick aus einem Schmelzklebstoff zur Verwendung in einer Heissklebepistole**

(71) Anmelder: Sika Technology AG, 6340 Baar (CH)
(72) Erfinder: Janke, Doreen, 25486 Alveslohe (DE)
(74) Vertreter: Isler, Jörg

(57) **Zusammenfassung**

Die Erfindung betrifft einen Heissklebestick aus einem Schmelzklebstoff zur Verwendung in einer Heissklebepistole.

Die Erfindung zeichnet sich dadurch aus, dass der Schmelzklebstoff ein reaktiver Schmelzklebstoff (1) ist, und jeder Heissklebestick einzeln in einer gegen flüssiges Wasser dichten, insbesondere einer gegen Wasserdampf dichten, Umhüllung (3, 4, 5) vorliegt.

## Beschreibung

### Technisches Gebiet

Die Erfindung betrifft einen Heissklebestick aus einem Schmelzklebstoff zur Verwendung in einer Heissklebepistole.

### Stand der Technik

Heissklebesticks aus nichtreaktiven Schmelzklebstoffen auf der Basis von Ethylenvinylacetat (=EVA) sind bekannt. Es handelt sich bei Heissklebesticks um in Stangen- beziehungsweise Stäbchenform vorliegenden Schmelzklebstoff ―auch Klebestange genannt―-, der für kleinere Klebearbeiten mit Hilfe einer handelsüblichen Heissklebepistole verarbeitet werden kann.

Das Erhitzen und Auftragen des Schmelzklebstoffes auf ein Substrat mit einer Heissklebepistole erfolgt, indem die stangenförmigen Heissklebesticks an der Rückseite der Heissklebepistole eingeführt und im Inneren der Pistole durch eine elektrische Heizung, welche die Heissklebesticks an ihrem vorderen Ende erhitzt, geschmolzen werden. Der Schmelzklebstoff kann dann im flüssigen Zustand durch manuelles Betätigen eines Transporthebels oder bei einfacheren Heissklebepistolen durch ein Nachdrücken mit dem Daumen aus einer Applikationsdüse an der Vorderseite der Heissklebepistole herausgepresst werden. Wird im folgenden Text von einem Erhitzen des Schmelzklebstoffs geschrieben, so ist ein Aufheizen des Schmelzklebstoffs auf die Applikationstemperatur kurz über der Schmelztemperatur gemeint, da bereits hier die gewünschten Eigenschaften des Schmelzklebstoffs auftreten.

Die einfache Handhabung und der günstige Anschaffungspreis machen den Einsatz von Heissklebesticks aus nichtreaktiven Schmelzklebstoffen in Verbindung mit einer Heissklebepistole vor allem im privaten Sektor sehr attraktiv.

Ein Nachteil dieser Klebstoffsysteme ist jedoch die schlechte Arbeitsleistung. Nichtreaktive Schmelzklebstoffe sind thermoplastische Klebstoffe, die ihre Klebewirkung und Festigkeit ausschliesslich durch die Änderung des Aggregatzustandes von flüssig auf fest während des Abkühlvorganges erreichen. Für den Haftmechanismus ist bei EVA-Klebstoffsystemen wohl das mechanische Verankern mit dem Substrat zum wesentlichen Anteil verantwortlich. Sie weisen also eine eher schlechte Haftung auf und sind vor allem aufgrund ihres niedrigen Schmelzpunktes wenig wärmebeständig, da sie durch ein erneutes Erhitzen wieder aufgeschmolzen werden können.

Das Hauptproblem in der Verwendung von Heissklebesticks aus nichtreaktiven Schmelzklebstoffen, insbesondere auf Basis von EVA, mit einer Heissklebepistole liegt also in ihren schlechten Hafteigenschaften und mangelnden Wärmebeständigkeit.

Weiterhin sind reaktive Schmelzklebstoffe bekannt. Dabei handelt es sich um lösungsmittelfreie und bei Raumtemperatur nahezu feste Stoffe. Zum Verkleben zweier Flächen wird der reaktive Schmelzklebstoff im heissen Zustand auf das Substrat aufgetragen. Er baut unmittelbar nach seiner Applikation durch Abkühlen eine hohe Anfangshaftfestigkeit auf. Im Gegensatz zu den nichtreaktiven Schmelzklebstoffen kann ein reaktiver Schmelzklebstoff jedoch zusätzlich auch noch chemisch vernetzen bzw. mit den Oberflächen der Substrate reagieren und bildet dann ein Elastomer, welches durch Hitzeeinwirkung nicht mehr vollständig aufgeschmolzen werden kann. Seine Endeigenschaften, insbesondere Wärmestandfestigkeit und Beständigkeit gegenüber Umwelteinflüssen, erhält der reaktive Schmelzklebstoff also durch die chemische Reaktion, die zu einer allmählich ablaufenden Aushärtung führt.

Reaktive Schmelzklebstoffe kombinieren die Vorteile von schnell abbindenden Schmelzklebstoffen mit denen von chemisch vernetzenden Klebstoffen. Sie härten also schnell aus und ihre Klebeverbindung kann durch einfaches Erhitzen nicht wieder gelöst werden. Sie erlauben allgemein schnelle Arbeitsprozesse ohne langwierige Trockenprozesse. Ihre Einsatzgebiete sind vielfältig, jedoch hauptsächlich in der Industrie zu finden. Typische Anwendungen finden sich beispielsweise im Automobilbau, in der Textilindustrie, in der Verpackungsmittelindustrie, sowie in der Möbelindustrie.

Nachteilig an der Verwendung von Schmelzklebstoffen ist jedoch die relativ aufwendige Verarbeitung dieser Stoffe mit kostenintensiven Geräten zum Erhitzen und auf Temperatur halten des Schmelzklebstoffs. Ausserdem müssen die reaktiven Schmelzklebstoffe bei der Lagerung und vor oder während der Verarbeitung vor Feuchtigkeit geschützt werden, da die reaktiven Gruppen des Schmelzklebstoffs sonst zum Beispiel mit der Luftfeuchtigkeit reagieren und vernetzen, so dass der Schmelzklebstoff danach nicht mehr aufgeschmolzen werden kann, also unbrauchbar ist. Dazu werden sie bisher in luft- und wasserdichten Kartuschen aus Metall oder Kunststoff verpackt, mit denen sie auch verarbeitet werden.

Es ist daher Aufgabe der Erfindung eine Möglichkeit zu finden, die Anwendungs- und Benutzerfreundlichkeit der herkömmlichen Heissklebesticks aus nichtreaktiven Schmelzklebstoffen mit den geforderten Eigenschaften wie hohe Haftfestigkeit und Wärmebeständigkeit von reaktiven Schmelzklebstoffen zu verbinden.

### Darstellung der Erfindung

Diese Aufgabe wird durch die Merkmale des unabhängigen Patentanspruches 1 gelöst. Vorteilhafte Weiterbildungen der Erfindung sind Gegenstand untergeordneter Ansprüche.

Der Erfinder hat erkannt, dass reaktive Schmelzklebstoffe in Form von stangenförmigen Heissklebesticks mit einer herkömmlichen Heissklebepistole verarbeitet werden können, wenn diese bis zur Verarbeitung sowohl wasser- als auch wasserdampfdicht verpackt sind. Auf diese Weise lassen sich die Forderungen nach einer hochwertigen Verklebung, also beispielsweise eine bessere Wärmebeständigkeit durch die chemische Vernetzung mit dem Substrat, erfüllen. Heissklebesticks aus reaktiven Schmelzklebstoffen sind wärmebeständig und weisen ebenso gute, typischerweise stark verbesserte Adhäsionseigenschaften auf wie herkömmliche EVA-Klebstoffsysteme. Ausserdem können derart verpackte reaktive Schmelzklebstoffe problemlos über einen längeren Zeitraum gelagert werden, ohne dass eine unerwünschte Reaktion mit Wasser stattfindet. Reaktive Schmelzklebstoffe erfüllen somit alle Forderungen an ein derartiges Klebstoffsystem. Als reaktive Schmelzklebstoffe eignen sich vor allem Polyurethan- und Polyolefin-Zusammensetzungen.

Reaktive Polyurethan-Schmelzklebstoffe (PUR-RHM = polyurethan ― reactive hot melt) bestehen aus isocyanat-terminierten Polyurethan-Prepolymeren, die durch Umsetzung geeigneter Polyole mit einem Überschuss an Diisocyanaten hergestellt werden. Sie härten durch die chemische Reaktion der Isocyanatgruppen mit der Luftfeuchtigkeit.

Reaktive Polyolefin-Schmelzklebstoffe basieren meistens auf silangepfropften Polyolefinen, vorzugsweise auf silangepfropften ataktischen Poly-α-olefinen (APAO). Meist weisen diese reaktiven Polyolefin-Schmelzklebstoffe noch anderen thermoplastische Polymere und/oder Harze auf. Solche reaktive Schmelzklebstoffe härten durch die chemische Reaktion der Silangruppen mit Luftfeuchtigkeit.

Um Heissklebesticks aus reaktiven Schmelzklebstoffen auch für private Nutzer zur Verfügung stellen, also beispielsweise im Baumarkt anzubieten, zu können, können diese Heissklebesticks einzeln wasser- und wasserdampfdicht umhüllt werden, so dass die reaktiven Gruppen nicht bereits vor der Verarbeitung mit der Umgebungsfeuchte reagieren können.

Derartige Umhüllungen können beispielsweise eine Folie, eine wasserdichte Beschichtung des Heissklebesticks oder ein Beutel sein, wobei eine eng an den Heissklebestick anliegende Folie oder eine dünne Beschichtung bei geeigneter Wahl des verwendeten Materials nicht unbedingt vor der Verarbeitung mit einer Heissklebepistole entfernt werden muss. Hierfür eignen sich beispielsweise Polyethylene. Alternativ kann auch eine Beschichtung aus einem Wachs, insbesondere einem olefinischen Wachs, auf den Heissklebestick aufgetragen werden. Diese Wachse sind unpolar und wasser- beziehungsweise wasserdampfundurchlässig. Zum Beschichten kann der aus der Schmelze geformte und bereits abgekühlte Heissklebestick einfach durch ein Wachsbad gezogen werden. Des Weiteren lassen sich Wachse vor allem mit den Polyolefin-Schmelzklebstoffen sehr gut mischen und zeigen keine negativen Einflüsse auf das eigentliche Verkleben.

Um innerhalb einer Folie oder einem Beutel eine vollständig feuchtefreie Umgebung zu schaffen, können diese entweder unter Vakuum verpackt werden oder beim Verpacken mit einem inerten und wasserfreien Gas, zum Beispiel Stickstoff oder Sauerstoff, gespült werden.

Weiterhin ist es möglich, die verwendete Heissklebepistole nach dem Schmelzen und Verarbeiten des flüssigen reaktiven Schmelzklebstoffes, zu reinigen, indem diese mit einem wieder aufschmelzbaren Material gespült wird. Dadurch kann ein sogenanntes Vercracken, also eine Verkleben des in der Heissklebepistole verbleibenden Schmelzklebstoffrestes mit dem Material der Heissklebepistole, verhindert werden. Andernfalls reagiert der restliche Schmelzklebstoff mit der Luftfeuchte und verstopft schlimmstenfalls die Pistole. Diese Reinigung kann beispielsweise durch ein "Rausspülen" des reaktiven Schmelzklebstoffes mit einem nichtreaktiven Reinigungsmaterial, welches eine mechanische Verdrängung bewirkt, oder eine Neutralisation des reaktiven Schmelzklebstoffes mit einem reaktiven Reinigungsmaterial durchgeführt werden. Das Reinigungsmaterial kann zum Beispiel in den hinteren Teil des Heissklebesticks integriert sein oder als separater Reinigungsstick ausgeführt werden.

Als nichtreaktive Reinigungsmaterialien können Thermoplaste, beispielsweise Ethylenvinylacetat, oder herkömmliche nichtreaktive Schmelzklebstoffe verwendet werden. Als reaktive Reinigungsmaterialien können solche Materialien verwendet werden, welche beispielsweise eine Hydroxylgruppe, eine Amingruppe oder eine Amidgruppe enthalten, die bei Kontakt mit dem in der Pistole verbleibenden reaktiven Schmelzklebstoff mit den Isocyanatgruppen reagieren und dadurch die reaktiven Gruppen des Klebstoffs blockieren und somit den reaktiven Schmelzklebstoff in einen nicht-reaktiven Klebstoff überführen. Ein Beispiel hierfür sind Alkohole, zum Beispiel Fettalkohol, deren Hydroxylgruppen mit den Isocyanatgruppen reagieren.

Entsprechend diesem Grundgedanken schlägt der Erfinder vor, einen Heissklebestick aus einem Schmelzklebstoff zur Verwendung in einer Heissklebepistole dahingehend zu verbessern, dass der Schmelzklebstoff ein reaktiver Schmelzklebstoff ist, und jeder Heissklebestick einzeln in einer gegen flüssiges Wasser dichten, insbesondere einer gegen Wasserdampf dichten, Umhüllung vorliegt.

Vorteilhafterweise kann als reaktiver Schmelzklebstoff eine Polyurethan-oder eine Polyolefin-Zusammensetzung verwendet werden. Dabei kann einerseits die Polyurethan-Zusammensetzung vorteilhafterweise mindestens ein isocyanat-terminiertes Polyurethan-Prepolymer aufweisen, welches durch Umsetzung geeigneter Polyole mit einem Überschuss an Diisocyanaten hergestellt wird. Andererseits kann die Polyolefin-Zusammensetzung mindestens ein silangepfropftes Polyolefin aufweisen, welches insbesondere noch zusätzlich andere thermoplastische Polymere und/oder Harzen enthält.

Für die Umhüllung gibt es mehrere Möglichkeiten. Dabei unterscheiden sich diese grundlegend darin, ob die Umhüllung vor der Verarbeitung des Heissklebesticks in einer Heissklebepistole vorteilhafterweise entfernt wird oder, ob diese zusammen mit dem Heissklebestick in die Heissklebepistole eingeführt, geschmolzen und verarbeitet werden kann. Eine Umhüllung, die beispielsweise aus einer Polyethylen-Folie oder einer Beschichtung aus Polyethylen oder Wachs, zum Beispiel einem olefinischen Wachs, besteht, muss nicht unbedingt entfernt werden. Alternativ kann die Umhüllung auch aus einem Beutel bestehen, welcher vorteilhafterweise vor der Verarbeitung entfernt wird.

Der Beutel kann beispielsweise aus einer Metallfolie, insbesondere einer Aluminiumfolie, insbesondere einer beschichteten Aluminiumfolie, insbesondere einer mit Polyethylen beschichteten Aluminiumfolie, bestehen. Alternativ ist auch eine Kunststofffolie möglich. Des Weiteren erfüllt auch eine Kombination aus einem Kunststoff und Aluminium in Form einer Kunststoff-Aluminium-Laminatfolie die erforderlichen Bedingungen.

Bei einem Beutel ist es weiterhin vorteilhaft und anwendungsgerecht, wenn dieser eine Aufreissvorrichtung zum einfachen Öffnen aufweist. Dies kann beispielsweise ein integriertes Aufreissband oder eine Einkerbung sein.

Eine bevorzugte Ausführungsform der erfindungsgemässen Heissklebesticks aus reaktivem Schmelzklebstoff sieht vor, dass diese zumindest teilweise ein Reinigungsmaterial aufweisen, mit welchem Reste des reaktiven Schmelzklebstoffes aus der Heissklebepistole gespült werden können. Dabei kann beispielsweise nur das hintere Ende eines Heissklebesticks aus dem Reinigungsmaterial bestehen. Hierbei muss der kombinierte Schmelzklebstoff-/Reiniger-Stick erst vollständig verarbeitet werden, bis das Reinigungsmaterial am Ende des Heissklebesticks in der Heissklebepistole geschmolzen ist und die Heissklebepistole gespült wird.

Alternativ können auch separate Reinigungssticks verwendet werden, mit denen nach der Verarbeitung eines Heissklebesticks in einem zusätzlichen Arbeitsschritt die Heissklebepistole gespült werden kann. Der Vorteil von separaten Reinigungssticks liegt darin, dass jederzeit die Klebearbeiten unterbrochen werden können, der Heissklebestick gegen einen Reinigungsstick getauscht und die Heissklebepistole gespült werden kann. Somit muss der Heissklebestick nicht vollständig aufgebraucht werden. Auf diese Art ist ein sparsamerer Umgang mit dem Material möglich.

Als Reinigungsmaterial eignen sich sowohl reaktive als auch nichtreaktive Materialien, wobei bei den reaktiven Reinigungsmaterialien nicht nur eine mechanische Verdrängung der Schmelzklebstoffreste in der Heissklebepistole durch das Reinigungsmaterial stattfindet, sondern auch ein chemisches Abreagieren ― Blockieren ― des Schmelzklebstoffes.

Reaktive Reinigungsmaterialien können aus Materialien bestehen, die eine insbesondere eine Amingruppe, Amidgruppe oder Hydroxylgruppe aufweisen. Diese Gruppen reagieren beim Kontakt mit den reaktiven Isocyanatgruppen des reaktiven Schmelzklebstoffes. Hydroxylgruppen sind beispielsweise in Alkohol, zum Beispiel Fettalkohol, vorhanden. Ein anderes beispielhaftes reaktives Reinigungsmaterial ist der Reaktivhotmelt-Reiniger SikaMelt®-9900 der Sika Automotiv GmbH, Deutschland. Reaktive Reinigungsmaterialien können vorteilhafterweise auch mit einem Thermoplast gemischt werden, so dass der Thermoplast dann als Trägermittel dient. Besonders bevorzugt ist eine Mischung aus Fettamid und Ethylen-VinylacetatCopolymere.

Nichtreaktive Reinigungsmaterialien können entweder nichtreaktive Schmelzklebstoffe oder Thermoplaste sein.

Nichtreaktive Materialien enthalten vorzugsweise mindestes einen Thermoplasten, welcher ausgewählt ist aus der Gruppe bestehend aus Ethylenvinylacetat, thermoplastisches Polyurethan, thermoplastisches Polyamid (PA), thermoplastisches Co-Polyamid, thermoplastischer Polyester (PES), thermoplastischer Co-Polyester, thermoplastisches Ethylen-Vinylacetat-Copolymer (EVA), thermoplastisches Polyolefin, ataktisches Poly-α-olefin (APAO), Polypropylen (PP) und Polyethylen (PE). Möglich sind auch nichtreaktive Schmelzklebstoffe auf Basis einer Kombination der oben genannten thermoplastischen Stoffe.

### Kurze Beschreibung der Zeichnungen

Im Folgenden wird die Erfindung anhand eines bevorzugten Ausführungsbeispieles mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin handelt es sich bei den hier gezeigten Figuren um rein schematische Darstellungen.

Es zeigen im Einzelnen:
- FIG.1:: Heissklebestick aus reaktivem Schmelzklebstoff mit Reinigungsmaterial;
- FIG. 2:: Heissklebestick gemäss Figur 1 in einer Folie;
- FIG. 3:: Heissklebestick gemäss Figur 1 mit Beschichtung;
- FIG. 4:: Heissklebestick gemäss Figur 1 in einem Beutel.

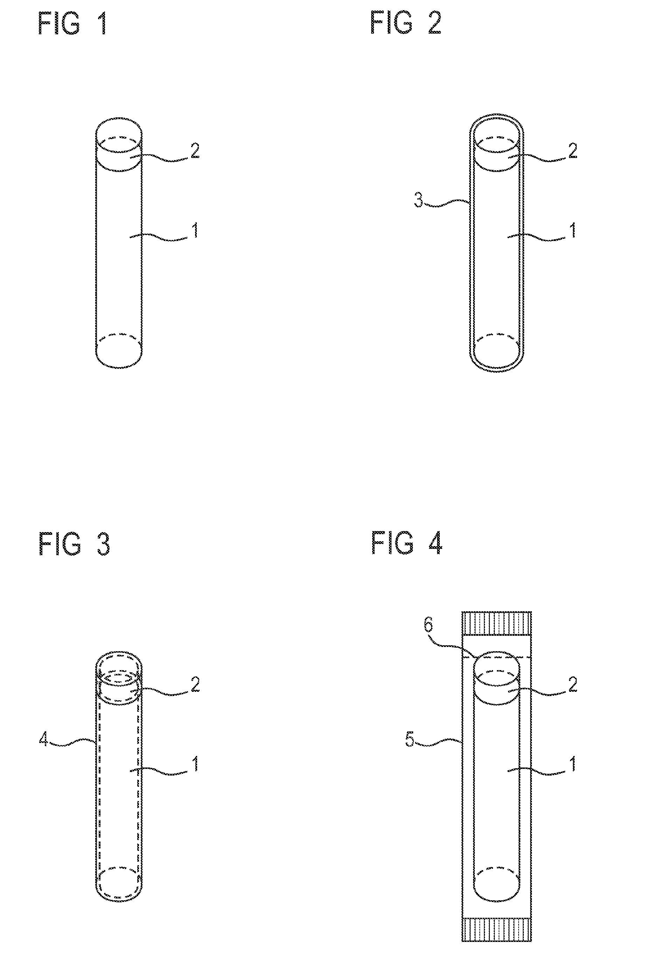

Die Figuren 1 bis 4, insbesondere die **Figur 1**, zeigen jeweils einen erfindungsgemässen Heissklebestick aus einem reaktiven Schmelzklebstoff 1 mit einem Reinigungsmaterial 2 am hinteren Ende ― also an dem Ende des Heissklebesticks, welches zuletzt geschmolzen wird -, wobei in den Figuren 2, 3 und **4** zusätzlich jeweils eine unterschiedliche Variante der wasser- und wasserdampfdichten Umhüllung des Heissklebesticks abgebildet ist. Das sind eine Folie 3 in der **Figur 2**, eine Beschichtung 4 in der **Figur 3** und ein Beutel 5 in der **Figur 4**.

Bei der Folie 3 und der Beschichtung 4 ist es besonders benutzerfreundlich, wenn diese möglichst dünn ist. Dafür eignet sich beispielsweise Polyethylen, wobei die Beschichtung 4 auch aus einem olefinischen Wachs bestehen kann. Sowohl die Folie 3 als auch die Beschichtung 4 kann zusammen mit dem Heissklebestick in die Heissklebepistole eingeführt und geschmolzen werden. Diese Art der Umhüllung muss also nicht zwangsläufig vor der Verarbeitung entfernt werden, da zum einen bei einer geeigneten Materialwahl die Klebeeigenschaften des reaktiven Schmelzklebstoffes nicht beeinträchtigt werden und zum anderen die Form des Heissklebesticks nicht derart verändert wird, dass er nicht mehr in den Einschub einer Heissklebepistole passt.

Wird der Heissklebestick jedoch in einem Beutel 5 verpackt, sollte dieser vor dem Verarbeiten entfernt werden. Dies kann durch ein Aufreissband 6 erleichtert werden.

Mit dem Reinigungsmaterial 2, welches sich am Ende des Heissklebesticks befindet und so als letztes in der Heissklebepistole geschmolzen wird, kann die Heissklebepistole "gespült" werden, um ein Vercracken zu verhindern. Das Reinigungsmaterial kann entweder reaktiv oder nichtreaktiv sein. Alternativ kann das Reinigungsmaterial 2 auch als separater Reinigungsstick ausgeführt werden, mit dem nach den Klebearbeiten in einem eigenen Arbeitsschritt die Heissklebepistole gespült werden kann.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Reaktiver Schmelzklebstoff
- 2: Reinigungsmaterial
- 3: Folie
- 4: Beschichtung
- 5: Beutel
- 6: Aufreissband

## Patentansprüche

1. Heissklebestick aus einem Schmelzklebstoff zur Verwendung in einer Heissklebepistole,
**dadurch gekennzeichnet,dass**
der Schmelzklebstoff ein reaktiver Schmelzklebstoff (1) ist, und
jeder Heissklebestick einzeln in einer gegen flüssiges Wasser dichten, insbesondere einer gegen Wasserdampf dichten, Umhüllung (3, 4, 5) vorliegt.

2. Heissklebestick gemäss dem voranstehenden Patentanspruch 1,
**dadurch gekennzeichnet,dass**
der reaktive Schmelzklebstoff (1) eine Polyurethan-Zusammensetzung ist, welche mindestens ein isocyanat-terminiertes Polyurethan-Prepolymer enthält, welches durch Umsetzung geeigneter Polyole mit einem Überschuss an Diisocyanaten hergestellt wird.

3. Heissklebestick gemäss dem voranstehenden Patentanspruch 1,
**dadurch gekennzeichnet,dass**
der reaktive Schmelzklebstoff (1) eine Polyolefin-Zusammensetzung ist, welche mindestens ein silangepfropftes Polyolefin, insbesondere silangepfropftes ataktisches Poly-α-olefin, enthält.

4. Heissklebestick gemäss einem der voranstehenden Patentansprüche 1 bis 3,
**dadurch gekennzeichnet,dass**
die Umhüllung eine Folie (3), insbesondere aus einem Polyethylen, ist.

5. Heissklebestick gemäss einem der voranstehenden Patentansprüche 1 bis 3,
**dadurch gekennzeichnet,dass**
die Umhüllung eine Beschichtung (4), insbesondere aus einem olefinischen Wachs, ist.

6. Heissklebestick gemäss einem der voranstehenden Patentansprüche 1 bis 3,
**dadurch gekennzeichnet,dass**
die Umhüllung ein Beutel (5), insbesondere aus einem Polyethylen, ist.

7. Heissklebestick gemäss dem voranstehenden Patentanspruch 6,
**dadurch gekennzeichnet,dass**
der Beutel (5) aus einer Metallfolie, insbesondere einer Aluminiumfolie, insbesondere einer beschichteten Aluminiumfolie, insbesondere einer mit Polyethylen beschichteten Aluminiumfolie, besteht.

8. Heissklebestick gemäss dem voranstehenden Patentanspruch 6,
**dadurch gekennzeichnet,dass**
der Beutel (5) aus einer Kunststofffolie, vorzugsweise aus einer Kunststoff-Aluminium-Laminatfolie, besteht.

9. Heissklebestick gemäss einem der voranstehenden Patentansprüche 1 bis 4 und 6 bis 8,
**dadurch gekennzeichnet,dass**
die Umhüllung (3, 5) eine Aufreissvorrichtung zum Öffnen, beispielsweise ein integriertes Aufreissband (6) oder eine Einkerbung, aufweist.

10. Heissklebestick gemäss einem der voranstehenden Patentansprüche 1 bis 9, **dadurch gekennzeichnet,dass**
der Heissklebestick zumindest teilweise ein Reinigungsmaterial (2) aufweist.

11. Heissklebestick gemäss dem voranstehenden Patentanspruch 10,
**dadurch gekennzeichnet,dass**
das Reinigungsmaterial (2) ein nichtreaktives Material ist.

12. Heissklebestick gemäss dem voranstehenden Patentanspruch 11,
**dadurch gekennzeichnet,dass**
das nichtreaktive Material mindestes einen Thermoplasten, welcher ausgewählt ist aus der Gruppe bestehend aus Ethylenvinylacetat, thermoplastisches Polyurethan, thermoplastisches Polyamid (PA), thermoplastisches Co-Polyamid, thermoplastischer Polyester (PES), thermoplastischer Co-Polyester, thermoplastisches Ethylen-Vinylacetat-Copolymer (EVA), thermoplastisches Polyolefin, ataktisches Poly-α-olefin (APAO), Polypropylen (PP) und Polyethylen (PE), enthält.

13. Heissklebestick gemäss dem voranstehenden Patentanspruch 10,
**dadurch gekennzeichnet,dass**
das Reinigungsmaterial (2) ein reaktives Material ist und insbesondere eine Hydroxylgruppe, Amingruppe oder Amidgruppe aufweist.
